# EUROPEAN PATENT SPECIFICATION

(11) **EP 4 259 870 B1**
(45) Date of publication and mention of the grant of the patent: **15.10.2025**
(21) Application number: 21902831.3
(22) Date of filing: 07.12.2021
(51) Int. Cl.: D04H 1/425, D04H 1/60, D04H 1/732, E04B 1/84

(54) **AIR-LAID BLANK FOR SOUND ABSORBING OR DAMPING, AND METHODS AND APPARATUSES FOR PRODUCING SUCH**
LUFTGELEGTER ROHLING ZUR SCHALLDÄMPFUNG ODER -DÄMPFUNG UND VERFAHREN UND VORRICHTUNGEN ZUR HERSTELLUNG DAVON
ÉBAUCHE FORMÉE PAR VOIE PNEUMATIQUE POUR INSONORISATION OU ISOLATION PHONIQUE, ET PROCÉDÉS ET APPAREILS POUR UNE PRODUCTION DE CELLE-CI

(30) Priority: 08.12.2020 SE 2051429
(43) Date of publication of application: 18.10.2023
(73) Proprietor: Stora Enso Oyj, 00101 Helsinki (FI)
(72) Inventor: TÖRNBLOM, Maria, 302 42 Halmstad (SE)
(74) Representative: Steinrud, Henrik
(86) International application number: PCT/IB2021/061409
(87) International publication number: WO 2022/123439

(56) References cited:
- EP-A2- 1 300 511
- WO-A1-2012/006300
- WO-A1-2018/107288
- WO-A1-2019/209160
- WO-A2-2006/107847
- WO-A2-2012/006338
- US-A- 4 590 114
- US-A1- 2018 044 825

## Description

### TECHNICAL FIELD

The present embodiments generally relate to air-laid blanks, methods and apparatuses for producing such air-laid blanks and to sound absorbing or damping articles made from such air-laid blanks.

### BACKGROUND

Today, most buildings where people congregate need to be equipped with sound damping or absorbing structures of some kind to prevent a loud and chaotic soundscape, which otherwise would cause stress and fatigue to those who have to spend time in them. Sound damping and absorbing structures typically consist of porous materials.

At present, the most commonly used material for such sound damping and absorbing structures is glass or mineral wool held together by a thermoset resin and often covered on visible surfaces with a porous layer of paint to enhance the visual impression. These materials are often made from recycled glass containers and so far fit very well into the emerging "low waste" economies. The problem arises at their end of life. Due to organic additives, such as paint and resin, it is not safe to re-melt the glass or mineral wool. Hence, the organic additives prevent recycling of the materials to produce new sound damping or absorbing structures. Furthermore, the glass or mineral wool does not burn. Hence, the only option for their end of life is to put them into landfill.

There is therefore a need for other materials that could be used in sound damping and absorbing structures and that could be recycled into new materials of the same type but possibly for other applications, incinerated for energy or composted at their end of life. Such materials should, in addition, not only have good sound damping and absorbing properties but at the same time meet the demands on strength and stiffness in order to be integrated into building structures or used as stand-alone sound damping or absorbing structures.

US 2018/0044825 discloses manufacture of a product from used woven or knitted textile comprising vegetable or animal fibers. The collected used woven or knitted textile is granulated into fibers having an average fiber length of 3.6 to 5.5 mm and mixed with a thermoplastic fiber based binder and formed into a nonwoven mat. The product may be in the form of an acoustic board.

WO 2018/107288A1 discloses a sound insulating mat comprising a combined natural fibers-binder web, which comprises natural fibers and a synthetic binder. The web may be done by an air-laid process. WO 2019/209160A1 discloses a method for producing a cellulose product from a multi-layer cellulose blank structure, wherein the multi-layer cellulose blank structure is shaped into a two-dimensional or three-dimensional fibre composite structure having a single-layer configuration.

### SUMMARY

It is an objective to provide air-laid blanks that can be used to produce sound absorbing or damping articles.

This and other objectives are met by embodiments of the present invention.

The present invention is defined in the independent claims. Further embodiments of the invention are defined in the dependent claims.

An aspect of the invention relates to an air-laid blank comprising natural fibers and a thermoplastic polymer binder. The air-laid blank comprises multiple portions having a local fiber orientation distribution that is different from a fiber orientation distribution of a remaining portion of the air-laid blank.

Another aspect of the invention relates to a method of producing an air-laid blank. The method comprises introducing natural fibers and a thermoplastic polymer binder and/or a mixture of the natural fibers and the thermoplastic polymer binder into at least one inlet of a forming head. The method also comprises transporting the natural fibers and the thermoplastic polymer binder and/or the mixture to an outlet of the forming head. The method further comprises capturing the natural fibers and the thermoplastic polymer binder and/or the mixture as an unbound air-laid web on a collector arranged in connection with the outlet of the forming head. The method additionally comprises applying gas pulses onto multiple portions of the unbound air-laid web to induce local distortions of fiber orientations in the multiple portions. The method further comprises heat treating the unbound air-laid web to at least partly melt the thermoplastic polymer binder and form an air-laid blank.

A related aspect of the invention defines a further method of producing an air-laid blank. The method comprises introducing natural fibers into at least one inlet of a forming head, transporting the natural fibers to an outlet of the forming head and capturing the natural fibers as a web of natural fibers on a collector arranged in connection with the outlet of the forming head. The method also comprises applying gas pulses onto multiple portions of the web of natural fibers on the collector to induce local distortions of fiber orientations in the multiple portions. The method further comprises applying a thermoplastic polymer binder onto the natural fibers and heat treating the web of natural fibers and the thermoplastic polymer binder to form an air-laid blank.

A further aspect of the invention relates to an apparatus for producing a sound absorbing or damping air-laid blank. The apparatus comprises a forming head comprising at least one inlet configured to receive natural fibers and a thermoplastic polymer binder and/or a mixture of the natural fibers and the thermoplastic polymer binder and an outlet. The apparatus also comprises a belt collector running between drive rollers and arranged in connection with the outlet of the forming head and configured to capture the natural fibers and the thermoplastic polymer binder and/or the mixture as an unbound air-laid web. The apparatus further comprises a nozzle system arranged downstream of the forming head and comprising at least one gas nozzle configured to apply gas pulses onto multiple portions of the unbound air-laid web positioned on the belt collector to induce local distortions of fiber orientations in the multiple portions. The apparatus additionally comprises a bonding oven arranged downstream of the nozzle system and configured to heat treat the unbound air-laid web to at least partly melt the thermoplastic polymer binder and form an air-laid blank.

A related aspect of the invention defines a further apparatus for producing a sound absorbing or damping air-laid blank. The apparatus comprises a forming head comprising at least one inlet configured to receive natural fibers and an outlet. The apparatus also comprises a belt collector running between drive rollers and arranged in connection with the outlet of the forming head and configured to capture the natural fibers as a web of natural fibers. The apparatus further comprises a nozzle system arranged downstream of the forming head and comprising at least one gas nozzle configured to apply gas pulses onto multiple portions of the web of natural fibers positioned on the belt collector to induce local distortions of fiber orientations in the multiple portions. The apparatus further comprises a device configured to apply a thermoplastic polymer binder onto the web of natural fibers and a bonding oven arranged downstream of the nozzle system and the device and configured to heat treat the natural fibers and the thermoplastic polymer binder to form an air-laid blank.

Also disclosed herein is a sound absorbing or damping article comprising or made from an air-laid blank as defined above.

Air-laid blanks of the present invention can be used to produce sound damping or absorbing structures or articles configured to prevent a loud and chaotic soundscape. Air-laid blanks made from natural fibers have the advantage over traditional materials used in sound damping or absorbing structures or articles, i.e., glass or mineral wool held together with a thermoset resin, in that they can be recycled into new materials for the same or different applications, incinerated for energy or composted at their end of life. Air-laid blanks of the present invention can also be used for cushioning of packaged goods.

### BRIEF DESCRIPTION OF THE DRAWINGS

The embodiments, together with further objects and advantages thereof, may best be understood by making reference to the following description taken together with the accompanying drawings, in which:
Fig. 1 is a cross sectional view of an air-laid blank prior to inducing local distortions of fiber orientation distributions according to an embodiment;
Fig. 2 is a cross sectional view of an air-laid blank with locally distorted fiber orientation distributions according to an embodiment;
Fig. 3 is a cross sectional view of an air-laid blank with locally distorted fiber orientation distributions and formed cavities according to another embodiment;
Fig. 4 is a cross sectional view of the air-laid blank according to Fig. 3 following compression under heat;
Fig. 5 is a flow chart illustrating a method of producing an air-laid blank according to an embodiment;
Fig. 6 is a flow chart illustrating a method of producing an air-laid blank according to another embodiment;
Fig. 7 is a schematic overview of an upstream portion of an apparatus for producing an air-laid blank according to an embodiment;
Fig. 8 is a close-up of a nozzle system of the apparatus shown in Fig. 7;
Fig. 9 is a schematic overview of an apparatus for producing an air-laid blank according to an embodiment showing the air-laid blank in a longitudinal sectional view;
Fig. 10 is a schematic overview of an apparatus for producing an air-laid blank according to another embodiment showing the air-laid blank in a longitudinal sectional view; and
Figs. 11A to 11C are illustrative examples of sound absorbing or damping articles.

### DETAILED DESCRIPTION

The present embodiments generally relate to air-laid blanks, methods and apparatuses for producing such air-laid blanks and to sound absorbing or damping articles made from such air-laid blanks.

Air-laid blanks of the present invention can be used to produce sound damping or absorbing articles that are configured or designed to prevent a loud and chaotic soundscape. Air-laid blanks made from natural fibers have the advantage over traditional materials used in sound damping or absorbing structures or articles, i.e., glass or mineral wool held together with a thermoset resin, in that they can be recycled into new materials for the same or different applications, incinerated for energy or composted at their end of life.

A challenge with using air-laid blanks for sound damping or absorption is that the material should not only have good sound damping and absorbing properties, such as being porous, but should at the same time meet the demands on strength and stiffness required for sound damping and/or absorbing articles that may be integrated into buildings or used as stand-alone structures.

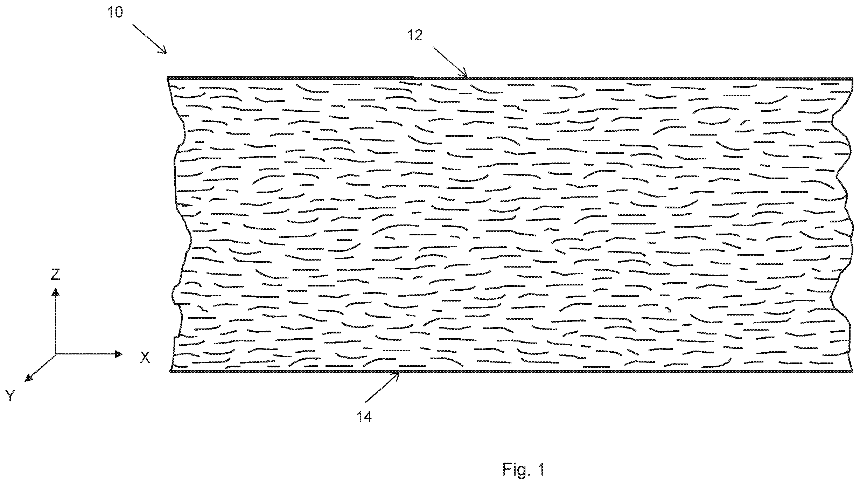

Air-laid blanks, sometimes also referred to as dry-laid blanks, air-laid mats, dry-laid mats, air-laid webs or dry-laid webs, are produced in an air-laying process generally involving introducing natural fibers and a polymer binder or more typically a mixture thereof into a forming head of an air-laying apparatus. The natural fibers and polymer binder are transported through the forming head and mixed with air to form a porous fiber mixture that is deposited onto and captured by a collector, typically in the form of a belt or wire collector. This air-laying process typically produces air-laid blanks where the vast majority of the natural fibers are oriented with their long axis close to parallel to the plane of the belt or wire collector and the major surfaces 12, 14 of the air-laid blank 10 (x-y-plane in Fig. 1) with very little fibers oriented perpendicular to this plane, i.e., along the z-axis in Fig. 1. The fiber structure of the air-laid blank 10, thus, becomes almost stratified or layered in planes perpendicular to the z-axis. Although less common, some air-laying processes may produce air-laid blanks where the vast majority of the natural fibers are oriented with their long axis close to parallel to the z-axis in Fig. 1. These air-laying processes require relatively long natural fibers and are, thus, not suited for wood or wood pulp fibers.

The stratified fiber orientation of air-laid blanks 10 as shown in Fig. 1 may be good for the strength and stiffness properties of the air-laid blank 10 but is not optimal for sound absorption. Hence, in order to achieve a good sound absorption, the internal fiber structure of the air-laid blank 10 should be more disordered, such as isotropic in three dimensions. Such a disorder in fiber orientations should, however, not be introduced across the whole air-laid blank 10 in order to preserve strength and stiffness properties of the air-laid blank 10.

An air-laid blank of the present invention has good sound damping and absorbing properties but still sufficient strength and stiffness to be used as a sound damping or absorbing structure or article. This is achieved by introducing discontinuous portions in the air-laid blank with a fiber orientation distribution that is different from the fiber orientation distribution of the remaining portion of the air-laid blank. An air-laid blank with separate portions with higher isotropy that are discontinuous both along the length extension of the air-laid blank (x-axis in Fig. 1) and the width extension of the air-laid blank (y-axis in Fig. 1) has a continuous remaining portion with the original stronger stratified fiber orientation to support the material structurally and thereby provide the required strength and stiffness. The air-laid blank thereby comprises multiple discontinuous portions, each having a local fiber orientation distribution that is different from a fiber orientation distribution of a remaining continuous portion of the air-laid blank.

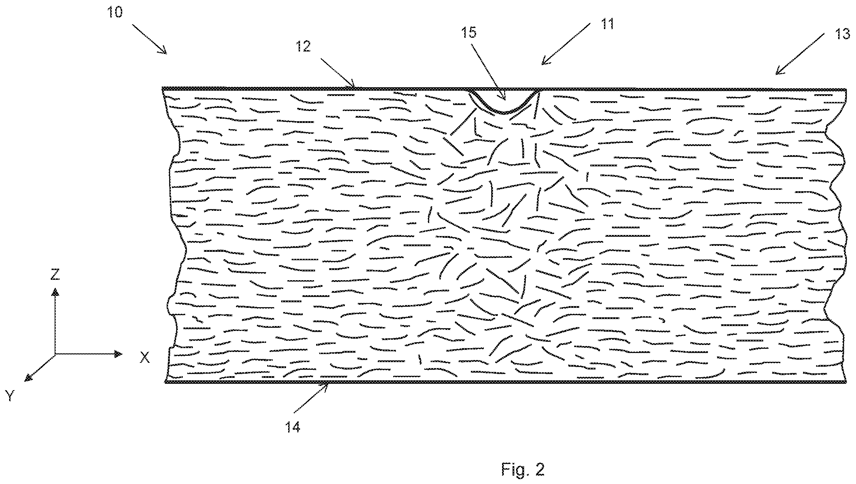

Hence, an aspect of the present invention relates to an air-laid blank 10, see the cross-sectional view in Fig. 2. The air-laid blank 10 comprises natural fibers and a thermoplastic polymer binder. The air-laid blank 10 comprises multiple portions 11 having a local fiber orientation distribution that is different from a fiber orientation distribution of a remaining portion 13 of the air-laid blank 10.

The air-laid blank 10, thus, comprises multiple, i.e., at least two, but typically a plurality of portions 11 having a local fiber orientation distribution that differs from the fiber orientation distribution of the remaining portion 13 of the air-laid blank 10. The multiple portions 11 are, which will be further described herein, randomly, pseudo-randomly or regularly distributed throughout the air-laid blank 10 in the x-y plane of Fig. 2 to constitute separate or discontinuous portions 11 with a different distribution in fiber orientations as compared to the main bulk or continuous portion 13 of the air-laid blank 10. In an embodiment, the multiple portions 11 are distributed in a predetermined pattern in the air-laid blank 10. These multiple portions 11 significantly improve the sound damping and absorbing properties of the air-laid blank 10 in Fig. 2 as compared to the air-laid blank 10 as shown in Fig. 1, while at the same time maintains most of the strength and stiffness properties or characteristics of the air-laid blank 10 as shown in Fig. 1.

Local fiber orientation distribution as used herein relates to the fiber orientation distribution in the respective multiple portions 11 of the air-laid blank 10, whereas the fiber orientation distribution of the remaining portion 13 of the air-laid blank 10 relates to the fiber orientation distribution in the rest of the air-laid blank 10 and may be regarded as the average or mean fiber orientation distribution of the air-laid blank 10 excluding the multiple portions 11.

In an embodiment, the fiber orientation distribution of the remaining portion 13 of the air-laid blank 10 is preferably such that a major portion of the fibers of the remaining portion 13 of the air-laid blank 10 is oriented at least substantially parallel, i.e., parallel or substantially parallel, to a first major surface 12 and a second major surface 14 of the air-laid blank 10. This means that the major portion of the fibers in the remaining portion 13 of the air-laid blank 10 is oriented in an x-y plane in Fig. 2 or in a plane substantially parallel to an x-y plane in Fig. 2.

Although the fiber orientation distribution of the remaining portion 13 of the air-laid blank 10 is preferably with a major portion of its fibers orientated parallel or substantially parallel to the first and second major surfaces 12, 14 of the air-laid blank 10 individual fibers in the remaining portion 13 of the air-lad blank 10 may be oriented in another direction, i.e., not necessarily parallel or substantially parallel to the first and second major surfaces 12, 14 of the air-laid blank 10. However, the majority of the fibers in this remaining portion 13 are directed in an x-y plane in Fig. 2 or in a plane substantially parallel to an x-y plane in Fig. 2 or in a plane angled at a low angle (≤15°, preferably ≤10° and more preferably ≤5°) relative to the x-y plane in Fig. 2.

Parallel to the first major surface 12 and the second major surface 14 of the air-laid blank 10 as used herein means that the major portion of the fibers of the remaining portion 13 of the air-laid blank 10 is oriented in a plane parallel to the first and second major surfaces 12, 14. Substantially parallel to the first major surface 12 and the second major surface 14 of the air-laid blank 10 as used herein means that the major portion of the fibers of the remaining portion 13 of the air-laid blank 10 is oriented in a plane or angled relative to the first and second major surfaces 12, 14 with an angle not exceeding 15°, preferably not exceeding 10°, and more preferably not exceeding 5°. Hence, in an embodiment, the major portion of fibers of the remaining portion 13 of the air-laid blank 10 is oriented in a plane parallel to the first and second major surfaces 12, 14 or angled relative to the first and second major surfaces 12, 14 with an angle not exceeding 15°, preferably not exceeding 10°, and more preferably not exceeding 5°.

In an embodiment, fiber orientation distribution means an angular distribution in space of the directions of the longitudinal axes of the different separate fibers in the multiple portions 11 or in the remaining portion 13 of the air-laid blank 10.

In another less common embodiment, the major portion of the fibers of the remaining portion 13 of the air-laid blank 10 is oriented substantially perpendicular to the first major surface 12 and the second major surface 14 of the air-laid blank 10. This means that the major portion of the fibers is oriented along or substantially along the z axis in Fig. 2.

In an embodiment, the local fiber orientation distribution of the multiple portions 11 has a higher level of isotropy as compared to the fiber orientation distribution of the remaining portion 13 of the air-laid blank 10. This means that the local fiber orientation distribution is more disordered, i.e., less stratified, and more isotropic as compared to the fiber orientation distribution of the remaining portion 13 of the air-laid blank 10. The fibers in the multiple portions 11 are thereby more distributed in three dimensions, i.e. are to a higher degree distributed over all three dimensions. Hence, the multiple portions 11 have fibers extending not only in the x-y-plane as the remaining portion 13 of the air-laid blank 10 but also fibers extending in other directions, such as along the z-axis, or at an angle larger than 0° but smaller than 90° relative to the z-axis, or may have fibers extending in substantially all directions.

In an embodiment, the remaining portion 13 of the air-laid blank 10 has a stratified fiber orientation distribution or structure, whereas the multiple portions 11 have a locally disordered fiber orientation distribution that is less stratified and more disordered in three dimensions as compared to this remaining portion 13.

In an embodiment, all the multiple portions 11 have substantially the same local fiber orientation distribution. The embodiments are, however, not limited thereto. It could also be possible to have different local fiber orientation distributions in different portions 11 of the air-laid blank 10, such as more or less disordered fiber orientation distributions.

In an embodiment, the multiple portions 11 extend through at least a portion of a thickness of the air-laid blank 10 from the first major surface 12 of the air-laid blank 10 to the second, opposite major surface 14 the air-laid blank 10. Hence, the multiple portions 11 could extend through the whole thickness of the air-laid blank 10 or merely down to a portion of the thickness from the first major surface 12. In the former case, the natural fibers present in the multiple portions 11 of the air-laid blank 10 between the first and second major surfaces 12, 14 preferably have a local fiber orientation distribution different from the fiber orientation distribution of the remaining portion 13 of the air-laid blank 10. In the latter case, merely those natural fibers present in the portion 11 of the air-laid blank 10 closest to the first major surface 12 has a local fiber orientation distribution different from the fiber orientation distribution of the remaining portion 13 of the air-laid blank 10. The natural fibers present beneath this portion 11 and closer to the second major surface 14 will then instead have a fiber orientation distribution more similar to the fiber orientation distribution of the remaining portion 13 of the air-laid blank 10. Hence, the local disorder in fiber orientation distribution is not present through the whole thickness of the air-laid blank 10.

The local fiber orientation distribution in the multiple portions 11 may be substantially uniform when going through the thickness of the air-laid blank 10 from the first major surface 12 to the second major surface 14. Thus, a substantially same local fiber orientation distribution may be present throughout the multiple portions 11. Alternatively, the local fiber orientation distribution of the multiple portions 11 may change when going through the thickness of the air-laid blank 10 from the first major surface 12 to the second major surface 14. For instance, the natural fibers closest to the first major surface 12 may be highly disordered and isotropic whereas the level of disorder and isotropy changes, such as reduces, closer to the second major surface 14. Thus, the natural fibers closer to the second major surface 14 may have a fiber orientation distribution that is more similar to the fiber orientation distribution of the remaining portion 13 of the air-laid blank 10, e.g., substantially in an x-y-plane with only a minor portion of fibers oriented in other directions, as compared to the natural fibers closer to the first major surface 12. Fig. 2 schematically illustrates this concept.

The local disorder in fiber orientation distribution may, as is further described herein, be achieved by applying gas pulses into the air-laid blank 10, or more correctly into an unbound or unbonded air-laid web that is formed into the air-laid blank 10 through heat treatment, and in particular into the first major surface 12 of the air-laid blank 10 or unbound air-laid web. This means that the natural fibers closest to this first major surface 12 are generally exposed to a stronger gas pulse as compared to natural fibers that are closer to the second major surface 14. As a consequence, the level of disorder and isotropy may change through the thickness of the air-laid blank 10 when using such gas pulses to create the multiple portions 11 having a local fiber orientation distribution that is different from the fiber orientation distribution of the remaining portion 13 of the air-laid blank 10.

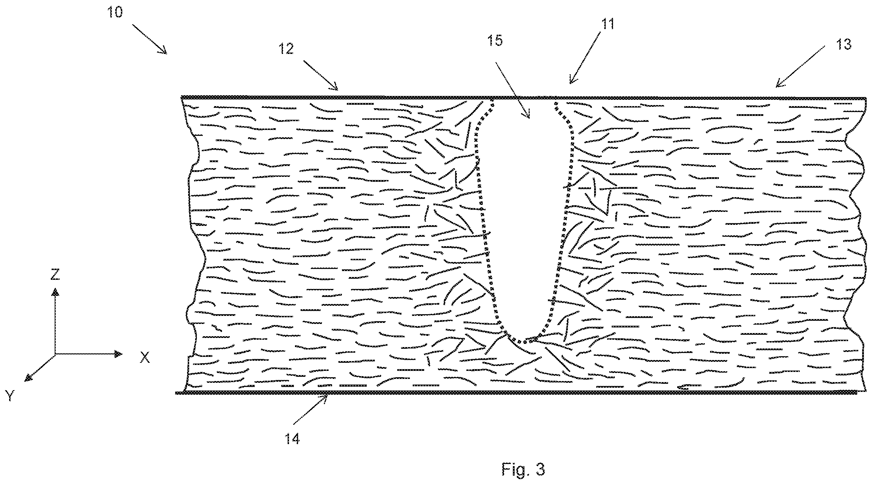

The gas pulses may also create cavities 15 or channels in the air-laid blank 10 as shown in Figs. 2 and 3. Hence, in an embodiment, the multiple portions 11 comprise a respective cavity 15 extending or receding into but not through a whole thickness of the air-laid blank 10 or a respective channel extending into and through the thickness of the air-laid blank 10. In such a case, the local fiber orientation distribution adjacent to the cavity 15 or channel is different from the fiber orientation distribution of the remaining portion 13 of the air-laid blank 10. In such an embodiment, the multiple portions 11 having a local fiber orientation distribution correspond to the portions of the air-laid blank 10 comprising the cavities 15 or channels together with the portion of the air-laid blank beneath the cavities 15 (Fig. 2) and/or adjacent portion of the air-laid blank 10 surrounding the cavities 15 or channels (Fig. 3) and in which the fiber orientations are distorted as indicated in the figures.

The depth of the cavities 15 into the air-laid blank 10 is dependent on the force of the gas pulses. The depth may go from a shallow indentation in the first major surface 12 shown in Fig. 2 to a deep pore as shown in Fig. 3. The multiple portions 11 of air-laid blank 10 comprising such cavities 15 have lower fiber density as compared to the remaining portion 13 of the air-laid blank 10. This will further enhance the sound damping and absorbing capacity of the air-laid blank 10. Hence, the cavities 15 or channels in the air-laid blank 10 with the adjacent locally distorted fiber orientations may even further improve the sound damping and absorbing capacity of the air-laid blank 10.

If the force of the applied gas pulses is sufficiently high, a cavity 15 may in fact penetrate through the whole thickness of the air-laid blank 10 to thereby form a channel through the thickness of the air-laid blank 10. Such channels constitute portions 11 of the air-laid blank 10 having lower fiber density as compared to remaining portion 13 of the air-laid blank 10.The channels are surrounded by fibers with locally distorted orientations that together with the channels constitute the multiple portions 11 having a local fiber orientation distribution.

In an embodiment, the force of the gas pulses is controlled to not form any channels but may form cavities 15 in the air-laid blank 10. In another embodiment, the force of the gas pulses is controlled to not form any channels or any cavities 15 in the air-laid blank.

It is also possible to have a mixture of cavities 15 and channels in the air-laid blank 10. In such a case, some of the multiple portions 11 of the air-laid blank 10 comprise a respective cavity 15, whereas other of the multiple portions 11 comprise a respective channel.

The multiple portions 11 could be distributed to form a regular pattern, such as a pre-determined pattern, in the air-laid blank 10, such as a regular grid or matrix in the x-y plane of Figs. 2 and 3. Alternatively, the multiple portions 11 may be more or less randomly distributed in the air-laid blank 10.

In an embodiment, the multiple portions 11 may have an average extension, such as average side length or average diameter, parallel with the first and second major surfaces 12, 14 that preferably does not exceed 100 mm, preferably does not exceed 75 mm, and more preferably does not exceed 50 mm, such as being equal to or below 25 mm.

The multiple portions 11 may have substantially the same extension, such as side length or diameter, or the air-laid blank 10 could comprise differently sized portions 11 having different extensions, such as different side lengths or diameters. Furthermore, the overall shape of the multiple portions 11 could be substantially the same, such as having a cylinder shape as an illustrative, but non-limiting, example. The embodiments are, however, not limited thereto. Hence, the air-laid blank 10 could comprise multiple portions 11 with different overall shapes and forms.

As mentioned in the foregoing, the multiple portions 11 are separate portions 11 in the air-laid blank 10. In an embodiment, the distance between adjacent portions 11 in the air-laid blank 10 is preferably at least twice the average side length or average diameter of the multiple portions 11, or at least twice the largest side length or diameter if having differently sized multiple portions 11. The distance is defined as the center-to-center distance parallel with the first and second major surfaces 12, 14. In a particular embodiment, the distance between adjacent portions 11 in the air-laid blank 10 is preferably at least three times the average side length or average diameter of the multiple portions 11.

In an embodiment, all of the multiple portions 11 occupy no more than 40% of the area of the first major surface 12 of the air-laid blank 10, preferably no more than 30 %, and more preferably no more than 25 %, such as no more than 20 %, 15 %, 10 % or 5 %. Generally, the higher percentage of the area of the first major surface 12 of the air-laid blank 10 that the multiple portions 11 occupy, the better the sound damping and absorbing capability of the air-laid blank 10. However, this also comes at a cost of lower strength and stiffness of the air-laid blank 10. This means that the percentage of the area of the first major surface 12 of the air-laid blank 10 occupied by the multiple portions 11 could be selected based on the particular type of sound damping or absorbing article or structure to manufacture from the air-laid blank 10 and thereby based on the demands on strength and stiffness and also demands on sound absorption and damping effect of the particular sound damping or absorbing article or structure.

It is generally preferred if the natural fibers in the air-laid blank 10 are short at least as compared to the fibers in glass or mineral wool. Having comparatively short natural fibers promotes formation of a porous air-laid blank 10 and may promote the sound damping and absorbing ability of the air-laid blank 10. In more detail, such short natural fibers are suitable for usage in embodiments of the present invention applying gas pulses onto the air-laid blank 10 to induce local distortions of fiber orientations in the multiple portions.

Length of fibers, such as natural fibers, as referred to herein is length weighted average fiber length. Length weighted average fiber length is calculated as the sum of individual fiber lengths squared divided by the sum of the individual fiber lengths as described in e.g., ISO 16065-1 or ISO 16065-2.

In an embodiment, the natural fibers have a length weighted average fiber length of up to 10 mm, preferably of up to 8 mm, more preferably of up to 6 mm, and most preferably up to 5 mm. In a particular embodiment, the natural fibers have a length weighted average fiber length selected within an interval of from 1 mm up to 10 mm, preferably selected within an interval of from 1 mm up to 8 mm, more preferably selected within an interval of from 1 mm up to 6 mm, and most preferably selected within an interval of from 1 mm up to 5 mm.

It is also possible to include a minor portion of longer fibers having a length weighted average fiber length of 10 mm or more.

In an embodiment, the air-laid blank 10 comprises the natural fibers at a concentration of at least 70 % by weight of the air-laid blank 10 and the polymer binder at a concentration selected within an interval of from 2.5 up to 30 % by weight of the air-laid blank 10.

In a preferred embodiment, the air-laid blank 10 comprises the natural fibers in a concentration of at least 72.5 %, more preferably at least 75 %, such as at least 77.5 %, at least 80 %, at least 82.5 %, at least 85 % by weight of the air-laid blank 10. In some applications, even higher concentrations of the natural fibers may be used, such as at least 87.5 %, or at least 90 %, at least 92.5 %, at least 95 % or at least 97.5 % by weight of the air-laid blank 10.

In some embodiments, the air-laid blank 10 comprises the polymer binder at a concentration selected within an interval of from 5 up to 30 % by weight of the air-laid blank 10, preferably within an interval of from 10 up to 25 %, such as from 12.5 up to 22.5 % by weight of the air-laid blank 10, or within an interval of from 15 up to 20 % by weight of the air-laid blank 10.

In an embodiment, the natural fibers are wood fibers. In a particular embodiment, the natural fibers are cellulose and/or lignocellulose fibers. Hence, in an embodiment, the natural fibers contain cellulose, such as in the form of cellulose and/or lignocellulose, i.e., a mixture of cellulose and lignin. The natural fibers may also contain lignin, such as in the form of lignocellulose. The natural fibers may additionally contain hemicellulose. In a particular embodiment, the natural fibers are cellulose and/or lignocellulose pulp fibers produced by chemical, mechanical and/or chemi-mechanical pulping of softwood and/or hardwood. For instance, the cellulose and/or lignocellulose pulp fibers are in a form selected from the group consisting of sulfate pulp, sulfite pulp, thermomechanical pulp (TMP), high temperature thermomechanical pulp (HTMP), mechanical fiber intended for medium density fiberboard (MDF-fiber), chemi-thermomechanical pulp (CTMP), high temperature chemi-thermomechanical pulp (HTCTMP), and a combination thereof.

The natural fibers, such as cellulose and/or lignocellulose pulp fibers, may be bleached or unbleached.

The natural fibers can also be produced by other pulping methods and/or from other cellulosic or lignocellulosic raw materials, such as flax, jute, hemp, kenaf, bagasse, cotton, bamboo, straw or rice husk. It is also possible to use natural fibers that are a mixture of fibers from different raw materials, such as a mixture of wood and any of the materials mentioned above.

The air-laid blank 10 may also comprise a minor portion of synthetic material or fibers that are mixed with the natural fibers. Such synthetic material or fibers that may be mixed with the natural fibers include, for instance, glass or mineral wool. Any such synthetic material or fibers may be added at an amount of no more than 10 % (w/w) of the air-laid blank 10, preferably no more than 8 % (w/w), such as no more than 6 % (w/w), or preferably no more than 4 % (w/w) of the air-laid blank 10.

Natural fiber materials are well suited for sound damping and absorbing applications since they generally have comparatively shorter fibers as compared to those in glass or mineral wool. They also have the added benefit of being moisture absorbing, which will even out fluctuations in humidity and thereby creating a better indoor climate and prevent condensation.

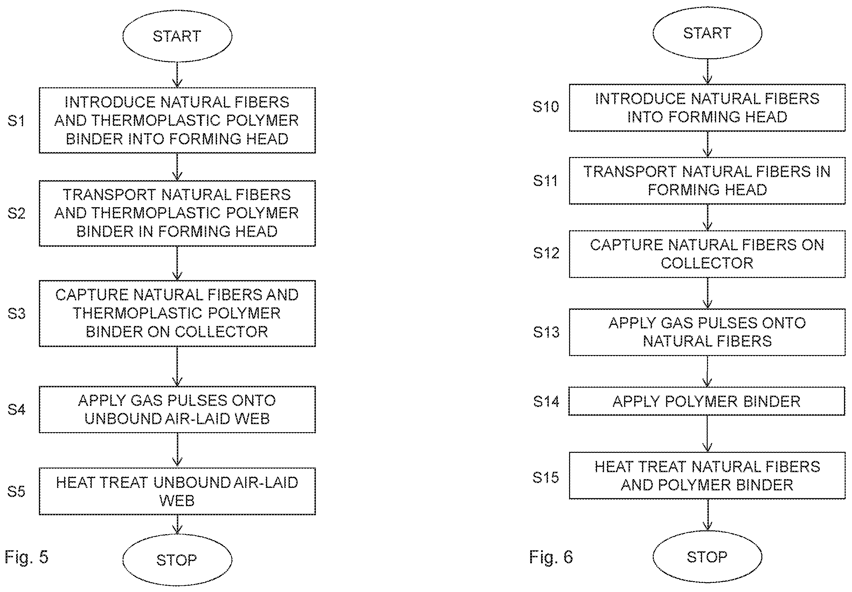

The polymer binder is included in the air-laid blank 10 to bind the air-laid blank 10 together and preserve its form and structure during use, handling and storage. In an embodiment, the polymer binder may also assist in building up the foam-like structure of the air-laid blank 10. The polymer binder is, in such an embodiment, intermingled with the natural fibers during the air-lying process forming a fiber mixture. The polymer binder may be added in the form of a powder, but is more often added in the form of fibers that are intermingled with the natural fibers in the air-laying process. Alternatively, or in addition, the polymer binder may be added as solution, emulsion or dispersion into and onto the air-laid blank 10 during the air-laying process as is further described below in connection with Fig. 6.

In a particular embodiment, the polymer binder is selected from the group consisting of a polymer powder, polymer fibers and a combination thereof.

The polymer binder is a thermoplastic polymer binder and could be a natural or synthetic polymer binder, or a mixture of natural polymer binders, a mixture of synthetic polymer binders, or a mixture of natural and synthetic polymer binders.

In an embodiment, the polymer binder is made from i) a material selected from the group consisting of polyethylene (PE), ethylene acrylic acid copolymer (EAA), ethylene-vinyl acetate (EVA), polypropylene (PP), polystyrene (PS), such as styrene-butadiene rubber (SBR) or styrene acrylate copolymer, polybutylene adipate terephthalate (PBAT), polybutylene succinate (PBS), polylactic acid (PLA), polyethylene terephthalate (PET), polycaprolactone (PCL), polyvinyl alcohol (PVA), polyethylene glycol (PEG), poly(2-ethyl-2-oxazoline) (PEOX), polyvinyl ether (PVE), polyvinylpyrrolidone (PVP), polyacrylic acid (PAA), polymethacrylic acid (PMAA), polyvinyl acetate (PVAc), polyurethane (PU), copolymers thereof and mixtures thereof, and ii) optionally one or more additives.

Hence, in an embodiment, the polymer binder is made of a material selected from the above mentioned group. In another embodiment, the polymer binder is made of a material selected from the above mentioned group and one or more additives.

In an embodiment, the thermoplastic polymer binder is preferably selected from the group consisting of a thermoplastic polymer powder, thermoplastic polymer fibers and a combination thereof.

In an embodiment, the polymer binder is or comprises, such as consists of, mono-component and/or bi-component thermoplastic polymer fibers. Bi-component thermoplastic polymer fibers, also known as bico fibers, comprise a first polymer, copolymer and/or polymer mixture and a second, different polymer, copolymer and/or polymer mixture. Most often the bi-component thermoplastic polymer fiber comprises a core made of the first polymer, copolymer and/or polymer mixture and a sheath made of the second polymer, copolymer and/or polymer mixture, although other combinations of two or even more polymers, copolymers and/or polymer mixtures are possible.

In a particular embodiment, the thermoplastic polymer binder is or comprises, such as consists of, mono-component thermoplastic polymer fibers made of i) a material selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives. In another particular embodiment, the thermoplastic polymer binder is or comprises, such as consists of, bi-component thermoplastic polymer fibers having a first material, such as a core made of i) a first material, selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives, and a second material, such as a sheath made of i) a second material, typically a different material, selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives. In a further embodiment, the thermoplastic polymer binder is or comprises, such as consists of, a combination or mixture of mono-component thermoplastic polymer fibers made of i) a material selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives, and bi-component thermoplastic polymer fibers having i) materials, such as of the core and/or sheath, selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives.

The thermoplastic polymer binder could be made of a single type of thermoplastic polymer fibers, i.e., made of a same material in the case of mono-component thermoplastic polymer fibers or made of the same materials in the case of bi-component thermoplastic polymer fibers. However, it is also possible to use a thermoplastic polymer binder made of one or multiple, i.e., two or more, different mono-component thermoplastic polymer fibers made of different materials and/or one or multiple different bi-component thermoplastic polymer fibers made of different materials.

An advantage of using bi-component thermoplastic polymer fibers is that they can have a core with a higher melting point that keeps its fiber form during the binding operation, whereas the sheath melts and becomes tacky. The intact core will support the three dimensional structure of the air-laid blank 10 and, thus, promote porosity while the melted or tackified sheath will attach to the natural fibers and preserve the strength of the air-laid blank 10.

In an embodiment, the polymer binder is a polymer powder, preferably a thermoplastic polymer powder, made of i) a material selected from the group consisting of PE, EAA, EVA, PP, PS, PBAT, PBS, PLA, PET, PCL, PVA, PEG, PEOX, PVE, PVP, PAA, PMAA, PVAc, PU, copolymers thereof and mixtures thereof, and ii) optionally one or more additives.

It is also, as mentioned in the foregoing, possible to use a thermoplastic polymer binder that is a combination of thermoplastic polymer fibers and thermoplastic polymer powder.

The sound absorbing or damping air-laid blank 10 may, thus, comprise one or more additives in addition to the natural fibers and the polymer binder. One or more additives could be added to the polymer binder and/or added when producing the polymer binder. Alternatively, or in addition, one or more additives could be added to the natural fibers. Alternatively, or in addition, one or more additives could be added to the natural fibers and the polymer binder, such as during the air-laying process.

Illustrative, but non-limiting, examples of such additives include electrically conducting or semiconducting fillers, coupling agents, flame retardants, dyes, impact modifiers, etc.

In a particular embodiment, the polymer binder comprises a natural polymer selected from the group consisting of starch, agar, guar gum, locust bean gum, carrageenan, and cellulose, such as fibrillar, microfibrillar or nanofibrillar cellulose.

In an embodiment, the polymer binder may be in the form of a water-based (aqueous) solution, emulsion, suspension or dispersion of the polymer binder.

Another aspect of the invention relates to a method of producing an air-laid blank 10, see Fig. 5 and Figs. 7 and 9 showing an embodiment of an apparatus 100 for producing an air-laid blank 10. The method comprises introducing, in step S1, natural fibers and a thermoplastic polymer binder and/or a mixture of the natural fibers and the thermoplastic polymer binder into at least one inlet 111 of a forming head 110. The method also comprises, transporting, in step S2, the natural fibers and the thermoplastic polymer binder and/or the mixture to an outlet 113 of the forming head 110. The method further comprises capturing, in step S3, the natural fibers and the thermoplastic polymer binder and/or the mixture as an unbound air-laid web 30 on a collector 120 arranged in connection with the outlet 113 of the forming head 110. The method additionally comprises applying, in step S4, gas pulses onto multiple portions 31 of the unbound air-laid web 30 to induce local distortions of fiber orientations in the multiple portions 31. The method further comprises heat treating, in step S5, the unbound air-laid web 30 to at least partly melt the thermoplastic polymer binder and form an air-laid blank 10.

In an embodiment, step S5 comprises heat treating the unbound air-laid web 30 to at least partly melt the thermoplastic polymer binder and form an air-laid blank 10 comprising multiple portions 11 having a local fiber orientation distribution that is different from a fiber orientation distribution of a remaining portion 13 of the air-laid blank 10.

In order to introduce a higher degree of disorder in the air-laid blank 10 to improve the sound damping and absorbing capacity of the air-laid blank 10, gas flows or pulses are applied in step S4 onto or into the unbound air-laid web 30 to locally distort the fibers in the unbound air-laid web 30 and reorient them to achieve a locally more disordered or isotropic fiber orientation distribution.

The transport of the natural fibers and the thermoplastic polymer binder and/or the mixture in the forming head 110 in step S2 contributes to separation into individual fibers to thereby promote a porous unbound air-laid web 30 on the collector 120.

The apparatus 100 used for producing an air-laid blank 10 comprises a forming head 110, also referred to as forming chamber in the art. The natural fibers and the thermoplastic polymer binder are input or introduced into the forming head 110 as one or more discrete input streams and/or as one or more mixed input streams at one or more inlets 111. For instance, the forming head 110 may, such as in connection with its upper end 112 or further down in the forming head 110, comprise one stream inlet for the natural fibers and one stream inlet for the thermoplastic polymer binder. In another embodiment, the forming head 110 comprises multiple stream inlets for the natural fibers and one stream inlet for the thermoplastic polymer binder, one stream inlet for the natural fibers and multiple stream inlets for the thermoplastic polymer binder or multiple stream inlets for the natural fibers and multiple stream inlets for the thermoplastic polymer binder. In these illustrative examples, the natural fibers and the thermoplastic polymer binder are mixed and blended during the transport through the forming head 110 ultimately forming an air-laid blank 10 on the collector 120.

Instead of, or as a complement to, having one or more input streams for the natural fibers and/or one or more input streams for the thermoplastic polymer binder, a pre-formed mixture of the natural fibers and the thermoplastic polymer binder may be introduced into the forming head 110 at one or multiple stream inlets 111.

The forming head 110 may include equipment arranged inside the forming head 110 to promote separation and mixing of the natural fibers and the thermoplastic polymer binder, and/or the mixture thereof during the transport through the forming head 110. Such equipment may comprise, for instance, rolls with interlocking spikes, one or more drums, such as slit drums, and/or one or more strainers.

In an embodiment, the collector 120 is an air-permeable collector 120. In such an embodiment, step S3 comprises capturing the natural fibers and the thermoplastic polymer binder and/or the mixture on the air-permeable collector 120, over which a vacuum is applied.

The natural fibers and the thermoplastic polymer binder and/or the mixture thereof is transported up to the forming head 110 by air and enters the forming head 110 in the at least one inlet 111, such as arranged in connection with the upper end 112 of the forming head 110, or further down in the forming head 110. The natural fibers and the thermoplastic polymer binder and/or the mixture thereof is then transported through the forming head 110 to the outlet 113, such as arranged in connection with the lower end 114 of the forming head 110.The natural fibers and the thermoplastic polymer binder and/or the mixture is then captured on the air-permeable collector 120 at least partly by a vacuum, i.e., an air suction or under-pressure, applied over the air-permeable collector 120 that is disposed in connection with the outlet 113 of the forming head 110.

The vacuum applied over the air-permeable collector 120, thus, draws the natural fibers and the thermoplastic polymer binder and/or the mixture thereof down onto the air-permeable collector 120.

The collector 120 is preferably air-permeable to allow application of the vacuum there over and draw the natural fibers and the thermoplastic polymer binder onto the air-permeable collector 120. For instance, the air-permeable collector 120 could comprise a plurality of openings, through holes or channels for allowing air to be sucked or drawn through the air-permeable collector 120. As an illustrative, but non-limiting, example, the air-permeable collector 120 could be a mesh collector 120 comprising a plurality of minute through holes. However, any such openings are preferably small enough to prevent the natural fibers and the thermoplastic polymer binder from passing through the air-permeable collector 120. Hence, the natural fibers and the thermoplastic polymer binder are instead deposited as a mixture onto the air-permeable collector 120 in the form of an unbound air-laid web 30.

The collector 120 could be a plate, disc, mesh or similar planar collector 120 that is arranged in connection with the outlet 113 of the forming head 110. Once the unbound air-laid web 30 has been formed on the collector 120, the collector 120 may be transferred from the forming head 110 with the unbound air-laid web 30 positioned thereon to be subjected to gas pulses at a nozzle system 130.

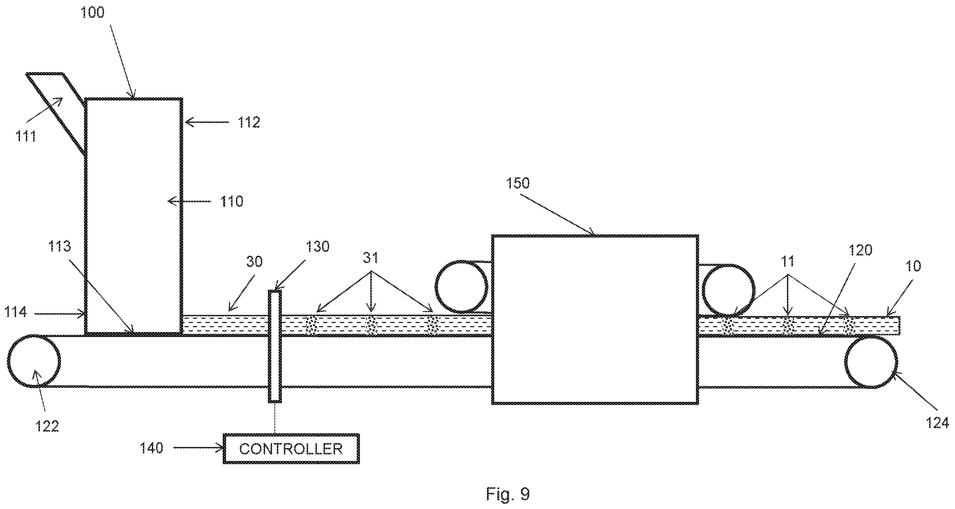

In another embodiment, which enables a continuous manufacture of air-laid blanks 10, the collector 120 could be in the form of a belt or wire collector 120, preferably an air-permeable belt or wire collector 120, running between drive rollers 122, 124 as shown in Fig. 9. In such an embodiment, step S4 comprises applying the gas pulses onto the multiple portions 31 of the unbound air-laid web 30 positioned on the belt collector 120 downstream of the forming head 110.

Downstream relates to the movement direction of the belt collector 120 from the drive roller 122 towards the drive roller 124. Hence, the gas pulses are applied onto the unbound air-laid web 30 in step S4 once the unbound air-laid web 30 has exited the forming head 110.

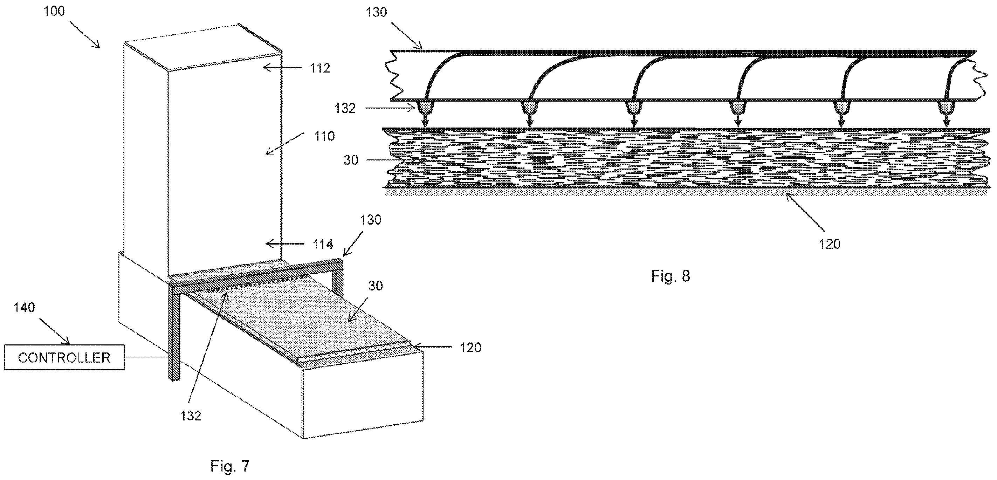

In an embodiment, the gas pulses are applied in step S4 by selectively applying gas pulses using multiple fixed gas nozzles 132, such as in one or more rows, see Fig. 8, arranged downstream of the forming head 110. Alternatively, or in addition, the gas pulses could be selectively applied in step S4 using at least one movable gas nozzle 132 arranged downstream of the forming head and selectively movable relative to the unbound air-laid web 30 positioned on the belt collector 120.

Fig. 8 schematically illustrates a nozzle system 130 comprising multiple gas nozzles 132 distributed along the width of the unbound air-laid web 30, or at least along a portion of the width of the unbound air-laid web 30. Gas pulses could then be selectively applied in step S4 using these gas nozzles 132 to induce local distortions of fiber orientations in multiple portions of the unbound air-laid web 30. Selectively applied as used herein implies, in an embodiment, that the gas nozzles 132 are controlled, such as by a controller 140, see Figs. 7 and 9, to apply the gas pulses at selected time instances or periods of time as the unbound air-laid web 30 is moved past the nozzle system 130 on the belt collector 120. In an embodiment, all gas nozzles 132 could be operated by the controller 140 to apply gas pulses at the same time. In another embodiment, the controller 140 could selectively activate the gas nozzles 132 to apply gas pulses so that not all gas nozzles 132 of the nozzle system 130 apply gas pulses at the same time. This allows generation of more or less regular patterns, such as matrices or grids, of portions 31 with locally distorted fiber orientations in the unbound air-laid web 30.

Instead of, or as a complement to, having a nozzle system 130 with fixed gas nozzles 132, one or more movable gas nozzles 132 could be arranged downstream of the forming head 110. In such a case, the controller 140 could control the at least one movable gas nozzle 132 to move relative to the unbound air-laid web 30 and selectively apply gas pulses onto the unbound air-laid web 30. In such a case, the at least one movable gas nozzle 132 is preferably at least movable along the width of the unbound air-laid web 30.

The heat treatment applied in step S5 performs a bonding operation, in which the unbound air-laid web 30 is introduced into a bonding oven 150, see Fig. 9, where heat, such as in the form of heated air, is circulated through the unbound air-laid web 30 to melt or partially melt the thermoplastic polymer binder. The thermoplastic polymer binder thereby becomes tacky and adheres to the natural fibers and, thus, holds the fiber material together and thereby resulting in an air-laid blank 10.

The heat treatment of step S5 causes at least a partial melting of the thermoplastic polymer binder to thereby become tacky and adhere to the natural fibers in the unbound air-laid web 30. As a consequence, the natural fibers and thermoplastic polymer binder hold together and form an air-laid blank 10. This heat treatment in step S5 preserves the local fiber orientation distributions introduced in step S4 by applying gas pulses. Hence, the air-laid blank 10 comprises multiple portions 11 having a local fiber orientation distribution that is different from the fiber orientation distribution of the remaining portion 13 of the air-laid blank 10.

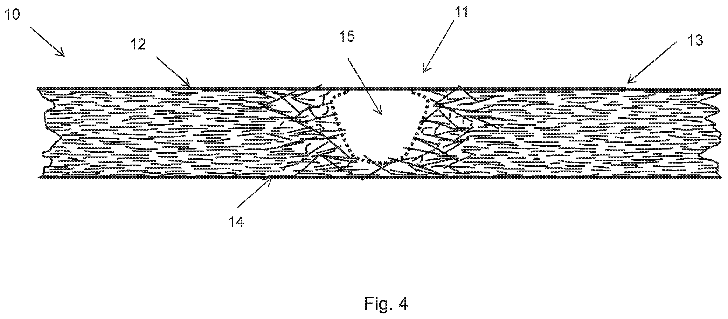

The bonding operation may also comprise, and/or be accompanied by, a densification to create a larger number of binding points in the fiber structure and, thus, a stronger and denser air-laid blank 10. Such a densification operation could be applied either before the air-laid blank 10 has been allowed to cool after the bonding oven 150 or upon renewed heating, such as in a heated calender. It is also possible to perform the densification operation in the bonding oven 150, e.g., as a combined heating and densification operation. The densification can include various types of operations including, but not limited to, calendering and/or pressing operations. Fig. 4 schematically illustrates a cross-sectional view of the air-laid blank 10 following heat treatment and densification. As is shown in Fig. 4, the multiple portions 11 with a local fiber orientation distribution different from the remaining portion 13 of the air-laid blank 10 are preserved in the air-laid blank 10 after the heat treatment and the densification operation.

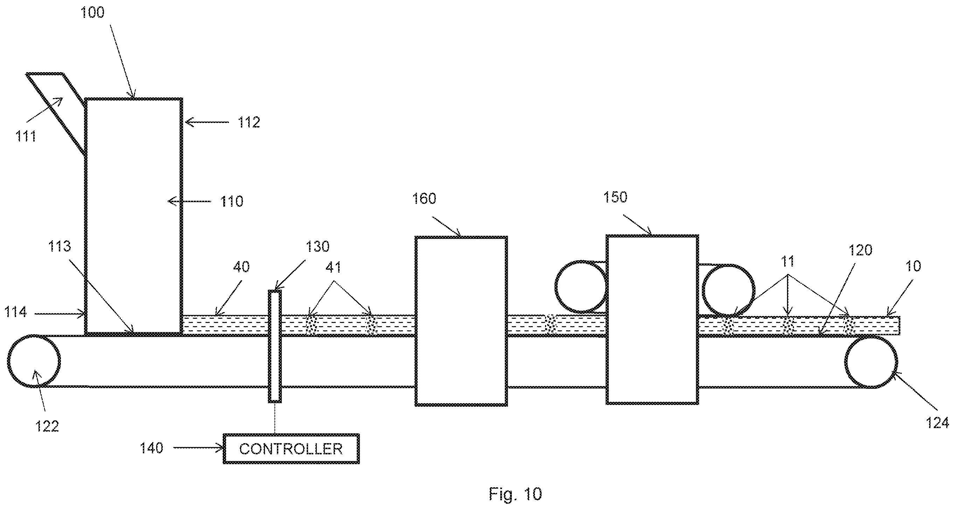

In the above described embodiment, the air-laid blank 10 is produced by introducing both the natural fibers and the thermoplastic polymer binder into the forming head 110. Fig. 6 is a flow chart illustrating another embodiment of a method of producing an air-laid blank 10, see also Fig. 10. The method comprises introducing, in step S10, natural fibers into at least one inlet 111 of a forming head 110. The method also comprises transporting, in step S11, the natural fibers to an outlet 113 of the forming head 110 and capturing, in step S12, the natural fibers as a web 40 of natural fibers on a collector 120 arranged in connection with the outlet 113 of the forming head 110. The method further comprises applying, in step S13, gas pulses onto multiple portions 41 of the web 40 of natural fibers on the collector 120 to induce local distortions of fiber orientations in the multiple portions. In this embodiment, the method also comprises applying a polymer binder onto the natural fibers in step S14. The method additionally comprises heat treating, in step S15, the web 40 of natural fibers and the polymer binder to form an air-laid blank 10 comprising multiple portions 11 having a local fiber orientation distribution that is different from a fiber orientation distribution of a remaining portion 13 of the air-laid blank 10.

This embodiment of the method differs from the one as discussed above in connection with Fig. 5 in that no polymer binder is introduced into the forming head 110 in step S10. In clear contrast, one or multiple streams of natural fibers and/or mixtures thereof are introduced in step S10 through one or multiple inlets 111 in the forming head 110. The natural fibers are transported through the forming head 110 in step S11 and then captured as a web 40 of natural fibers on the collector in step S12. Gas pulses are then applied to this web 40 of natural fibers in step S13 in a similar way to step S4 in Fig. 5 to induce local distortions of fiber orientations in multiple portions 41 in the web 40 of natural fibers. In this embodiment, the polymer binder is then applied to the web 40 of natural fibers prior to exposing the web 40 of natural fibers and the polymer binder to heat in the downstream bonding oven 150.

Hence, in this embodiment, the apparatus 100 comprises a device 160 arranged downstream of the nozzle system 130 but upstream of the bonding oven 150 to apply the polymer binder. This device 160 may apply the polymer binder as, for instance, a solution, emulsion, suspension or dispersion into and onto the web 40 of natural fibers in step S14. For instance, the polymer binder may be sprayed onto the web 40 of natural fibers in step S14. In an illustrative embodiment, the polymer binder is in the form of a water-based (aqueous) solution, emulsion, suspension or dispersion of at least one polymer binder in the form of one or more synthetic polymers and/or one or more natural polymers. In such a case, the polymer binder could be selected among the previously described polymer binder materials.

The following step S15 in Fig. 6 is performed in the same way as step S5 in Fig. 5. However, depending on the material of the polymer binder applied in step S14, the heat treatment applied in step S15 does not necessarily at least partly melt the polymer binder in the bonding oven 150 but may, if the polymer binder is in the form of a water-based solution, emulsion, suspension or dispersion dry off the water to form the air-laid blank 10. Such a drying operation also applies to using solvents other than water for the polymer binder.

The various embodiments of steps S1 to S5 described above can be applied mutatis mutandis to the method as shown in Fig. 6 but with the exception of not introducing any polymer binder in step S10.

The two described embodiments shown in Figs. 5 and 6 may also be combined. Hence, thermoplastic polymer binder may be introduced into the forming head as described above in connection with step S1 in Fig. 5 and additional polymer binder may then also be applied to the unbound air-laid web 30 as described in step S14 in Fig. 6 to, for instance, strengthen the surface of the resulting air-laid blank 10.

The methods described above and shown in the flow chart of Figs. 5 and 6 are suitable for producing air-laid blanks 10 according to the present invention, such as shown in Fig. 2 to 4. Hence, the air-laid blank 10 is obtainable or obtained by the methods described above and shown in the flow chart of Fig. 5 or 6.

A further aspect of the invention relates to an apparatus 100 for producing an air-laid blank 10, see Figs. 7 and 9. The apparatus 100 comprises a forming head 110 comprising at least one inlet 111 configured to receive natural fibers and a thermoplastic polymer binder and/or a mixture of the natural fibers and the thermoplastic polymer binder and an outlet 113. The apparatus 100 also comprises a belt collector 120 running between drive rollers 122, 124 and arranged in connection with the outlet 113 of the forming head 110 and configured to capture the natural fibers and the thermoplastic polymer binder and/or the mixture as an unbound air-laid web 30. The apparatus 100 further comprises a nozzle system 130 arranged downstream of the forming head 110 and comprising at least one gas nozzle 132 configured to apply gas pulses onto multiple portions 31 of the unbound air-laid web 30 positioned on the belt collector 120 to induce local distortions of fiber orientations in the multiple portions 31. The apparatus 100 also comprises a bonding oven 150 arranged downstream of the nozzle system 130 and configured to heat treat the unbound air-laid web 30 to at least partly melt the thermoplastic polymer binder and form an air-laid blank 10.

In an embodiment, the bonding oven 150 of the apparatus 100 is arranged downstream of the nozzle system 130 and configured to heat treat the unbound air-laid web 30 to at least partly melt the thermoplastic polymer binder and form an air-laid blank 10 comprising multiple portions 11 having a local fiber orientation distribution that is different from a fiber orientation distribution of a remaining portion 13 of the air-laid blank 10.

In an embodiment, an air flow is applied upstream of the forming head 110 and optionally in the forming head 110 from the upper end 112 towards the lower end 114 to transport the natural fibers and the thermoplastic polymer binder and/or the mixture of the natural fibers and the thermoplastic polymer binder towards the outlet 113 and the belt collector 120.

The forming head 110 may optionally comprise equipment arranged to promote separation and mixing of the natural fibers and the thermoplastic polymer binder, and/or the mixture thereof during the transport through the forming head 110. Such equipment may comprise, for instance, rolls with interlocking spikes, at least one drum, such as slit drum(s), and/or at least one strainer. This equipment is preferably arranged to separate individual fibers from each other and promote a mixing of the input components including the natural fibers and the thermoplastic polymer binder.

In an embodiment, the belt collector 120 is an air-permeable belt collector 120. For instance, the air-permeable belt collector 120 could comprise a plurality of openings, through holes or channels for allowing air to be sucked or drawn through the air-permeable belt collector 120. As an illustrative, but non-limiting, example, the air-permeable collector 120 could be a mesh collector 120. However, any such openings are preferably small enough to prevent the natural fibers and the thermoplastic polymer binder from passing through the air-permeable belt collector 120. Hence, the natural fibers and the thermoplastic polymer binder are instead deposited as a mixture onto the air-permeable belt collector 120 in the form of an unbound air-laid web 30.

In such an embodiment, the natural fibers and the thermoplastic polymer binder and/or the mixture thereof transported through the forming head 110 from the upper end 112, or from a position further down along the forming head 110 depending on where the at least one inlet 111 is positioned, to the lower end 114 are captured on the air-permeable belt collector 120 at least partly by a vacuum, i.e., an air suction or under-pressure, applied over the air-permeable belt collector 120 that is disposed in connection with the outlet 113 of the forming head 110.

The at least one gas nozzle 132 of the nozzle system 130 is configured to apply gas pulses onto the unbound air-laid web 30 to distort the natural fibers in the portions 31 of the unbound air-laid web 30 and reorient them, preferably, to have a locally more disordered or isotropic fiber orientation distribution. The gas pulses are typically air pulses but could be pulses of any gas or gas mixture that is compatible with the natural fibers and the thermoplastic binder, i.e., does not cause any degradation of the natural fibers or the thermoplastic binder. Illustrative, but non-limiting, examples of such other gases include N₂, and CO₂. Gas as used herein includes both pure gases made of single elements or compounds, such as N₂ and CO₂, and gas mixtures, such as air.

The nozzle system 130 may be connected through gas piping to a pressurized gas source. In an embodiment, the pressurized gas source is in the form of a compressor that compresses a gas, such as air, into a compressed gas that can be applied as gas pulses using the at least one gas nozzle 132. In another embodiment, the pressurized gas source is a pressurized gas supply, such as a gas cylinder or container, comprising pressurized gas.

In an embodiment, the apparatus 100 comprises a controller 140 configured to control the at least one gas nozzle 132 to selectively apply the gas pulses onto the multiple portions 31 of the unbound air-laid web 30 positioned on the belt collector 120.

In such an embodiment, the controller 140 could then control the gas flow from the pressurized gas source into the at least one gas nozzle 132 to apply gas pulses onto the unbound air-laid web 30 at scheduled or selected time instances. For instance, the nozzle system 130 could comprise a controllable gas valve that is in gas connection with multiple gas nozzles 132. The controller 140 could then control opening and closure of the controllable gas valve to thereby control the pressurized gas flow to the multiple gas nozzles 132. In such an embodiment, the pressurized gas flow is distributed to the multiple gas nozzles 132 simultaneously. In such an embodiment, a pressurized gas flow is distributed from an upstream controllable gas valve (not shown) to multiple gas nozzles 132 arranged in at least one array or row in the nozzle system 130. These multiple gas nozzles 132 thereby apply gas pulses simultaneously onto the unbound air-laid web 30.

In another embodiment, each gas nozzle 132 in the nozzle system 130 or at least a portion or group thereof may have individually controllable gas valves. In such an embodiment, the controller 140 could control opening and closure of these individually controllable gas valves in order to separately control the gas flow to each gas nozzle 132 or each group of gas nozzles 132 and thereby separately control the application of gas pulses. This embodiment enables formation of more complex patterns of the multiple portions 31 in the unbound air-laid web 30 and thereby enables distribution of the multiple portions 31 in the unbound air-laid web 30 in more complex regular or even irregular patterns as compared to having a single controllable gas valve for all gas nozzles 132.

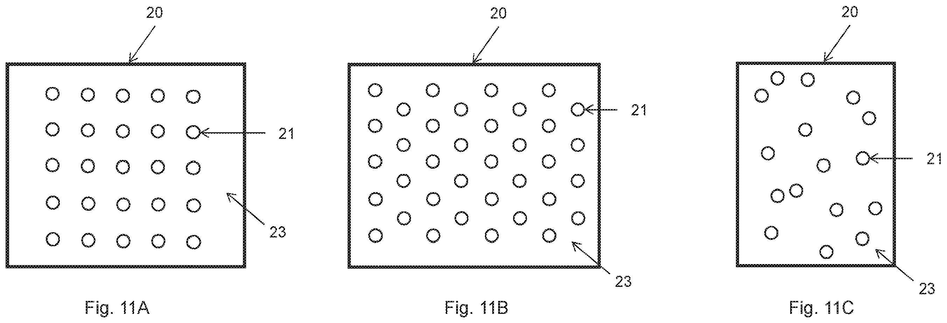

For instance, if one row of gas nozzles 132 is arranged in the nozzle system 130 across the air-laid blank 10 at regular distances and the gas pulses are applied simultaneously from the gas nozzles 132, the multiple portions 31 with distorted fiber orientations may be placed in a regular square grid pattern in the unbound air-laid web 30. Fig. 11A shows a sound absorbing or damping article 20 made from an air-laid blank 10 obtained from such an unbound air-laid web 30. As is shown in Fig. 11A, the sound absorbing or damping article 20 comprises a regular square grid pattern of multiple portions 21 having a local fiber orientation distribution that is different from a fiber orientation distribution of a remaining portion 23 of the sound absorbing or damping article 20. It is possible to form a more complex regular pattern of the multiple portions 21 as shown in Fig. 11B by, for instance, having multiple rows of equidistant gas nozzles 132 arranged in the nozzle system 130 and with the different rows of equidistant gas nozzles 132 displaced in the width direction of the unbound air-laid web 30 relative to each other. If, on the other hand, the gas flow to the gas nozzles 132 can be controlled individually and delivered at random time intervals, a random pattern of the multiple portions 21 with distorted fiber orientation can be formed as schematically shown for the sound absorbing or damping article 20 in Fig. 11C. The multiple portions 21 with distorted fiber orientation and the remaining portion 23 in the sound absorbing or damping article 20 in Figs. 11A to 11C correspond to the multiple portions 11 with distorted fiber orientation and the remaining portion 13 in the air-laid blank 10.

It may be advantageous for the combination of sound absorbing ability and strength and stiffness to have a random distribution of the multiple portions 11 or more complex patterns of the multiple portions 11 in the resulting air-laid blank 10.

It is also possible to have groups of multiple gas nozzles 132 in the nozzle system 130 and where each such group of gas nozzles 132 has individually controllable gas valves.

In another embodiment, the controller 140 is also configured to move the at least one gas nozzle 132 relative to the unbound air-laid web 30 positioned on the belt collector 120 and selectively apply the gas pulses onto the multiple portions 31 of the unbound air-laid web 30 positioned on the belt collector 120. For instance, the nozzle system 130 could comprise a robotic arm (not shown) comprising the at least one gas nozzle 132. The controller 140 could then control not only application of gas pulses from the at least one gas nozzle 132 but also control movement of the robotic arm and thereby the position of the at least one gas nozzle 132 relative to the unbound air-laid web 30. This means that the at least one gas nozzle 132 is moved over the unbound air-laid web 30 and applies gas pulses thereto. This embodiment enables creation of both regular and complex patterns of the multiple portions 31 including random distributions of the multiple portions 31.

The apparatus 100 comprises a bonding oven 150 arranged downstream of the nozzle system 130. The bonding oven 150 is configured to heat treat the unbound air-laid web 30 to at least partly melt and tackify the thermoplastic polymer binder. The bonding oven 150 may optionally also comprise equipment for densifying the unbound air-laid web 30, such as by compressing the unbound air-laid web 30 during the heat treatment.

The apparatus 100 may also comprise further downstream processing devices including, but not limited to, a sawing, cutting or stamping device, a calendering device, a hot pressing device, an anti-linting device, a surface treatment device, etc. Such downstream processing devices may be arranged downstream of the bonding oven 150.

A sawing, cutting or stamping device could be used to saw, cut or stamp the air-laid blank 10 into a desired shape and size to be used as sound absorbing or damping article 20, see Figs. 11A to 11C.

A calendering or hot pressing device could be used to densify the air-laid blank 10 to increase its strength and stiffness. A hot pressing device may also induce or create three-dimensional (3D) geometrical structures and/or indentations in the air-laid blank 10 and thereby the resulting sound absorbing or damping article 20. The hot pressing device may then comprise a male tool having at least one protrusion and/or a female tool comprising at least one indentation or recess. The male tool is then pressed into the air-laid blank 10 and the air-laid blank 10 is pressed into the female tool, while it is heated to compact the air-laid blank 10 and optionally to create any 3D geometrical structures in the air-laid blank 10.

In some applications, it may be desirable to seal some or all of the surfaces of the air-laid blank 10 or the sound absorbing or damping article 20, such as by heat, to prevent linting from the surface(s). Surfaces that are processed with heat in previous processing devices, such as a hot pressing device, will be sealed and do not need any additional (heat) sealing. For instance, end surfaces of the air-laid blank 10 or the sound absorbing or damping article 20 may be unprocessed or may have been produced by sawing, cutting or stamping the air-laid blank 10 to produce these end surfaces. In such a case, it may be preferred to heat seal these surfaces to prevent or at least suppress or inhibit linting.

In some applications, the air-laid blank 10 or the sound absorbing or damping article 20, or at least a portion thereof, can be laminated with a surface layer, such as a thermoplastic polymer film, a woven textile or non-woven textile. This can both prevent linting and add additional functions to the surface, such as surface strength, moisture barriers, haptic properties, color and designs. The film or textile could be made from any common thermoplastic or natural polymer. Examples include the previously mentioned thermoplastic, synthetic or natural polymer materials for usage as binders and cotton, wool. This layer could be heat laminated or extruded onto the air-laid blank 10 and/or laminated directly onto the sound absorbing or damping article 20.

The film, textile or surface layer may also be attached to the air-laid blank 10 or the sound absorbing or damping article 20 by help of a thin layer of a hotmelt glue, by an additional adhesive film, by the polymer binder or by its own having become semi-melted and tacky during the heat lamination process. This operation can be performed before, after or simultaneously with any hot pressing operation.

It is also possible to apply the surface layer by spraying it onto surface(s) of the air-laid blank 10 or the sound absorbing or damping article 20. The layer may then contain any substance(s) that can be prepared as solutions, emulsions, suspensions or dispersions, such as paints; thermoplastic polymers; natural polymers, such as starch, agar, guar gum, locust bean gum, or carrageenan, fibrillar, microfibrillar or nanofibrillar cellulose or lignocellulose or mixtures thereof. The surface layer may in addition comprise other substances, such as emulsifying agents, stabilizing agents, colorants, paint pigments, optical dispersion agents, fillers, electrically conductive agents, etc. that provide additional functionalities to the surface layer and the air-laid blank 10 or the sound absorbing or damping article 20.

Fig. 10 schematically illustrates an apparatus 100 for producing an air-laid blank 10 according to another embodiment. The apparatus 100 comprises a forming head 110 comprising at least one inlet 111 configured to receive natural fibers and an outlet 113. The apparatus 100 also comprises a belt collector 120 running between drive rollers 122, 124 and arranged in connection with the outlet 113 of the forming head 110 and configured to capture the natural fibers as a web 40 of natural fibers. The apparatus 100 further comprises a nozzle system 130 arranged downstream of the forming head 110 and comprising at least one gas nozzle 132 configured to apply gas pulses onto multiple portions 41 of the web 40 of natural fibers positioned on the belt collector 120 to induce local distortions of fiber orientations in the multiple portions 41. The apparatus 100 additionally comprises a device 160 configured to apply a polymer binder onto the web 40 of natural fibers and a bonding oven 150 arranged downstream of the nozzle system 130 and the device 160 and configured to heat treat the natural fibers and the polymer binder to form an air-laid blank 10.

In an embodiment, the bonding oven 150 is arranged downstream of the nozzle system 130 and the device 160 and configured to heat treat the natural fibers and the polymer binder to form an air-laid blank 10 comprising multiple portions 11 having a local fiber orientation distribution that is different from a fiber orientation distribution of a remaining portion 13 of the air-laid blank 10.

Hence, in this embodiment, the apparatus 100 comprises a device 160 arranged downstream of the nozzle system 130 but upstream of the bonding oven 150 to apply the polymer binder. This device 160 may apply the polymer binder as, for instance, a solution, emulsion, suspension or dispersion, preferably a water-based solution, emulsion, suspension or dispersion, into and onto the web 40 of natural fibers in step S14. For instance, the device 160 may spray the polymer binder onto the web 40 of natural fibers.

In an embodiment, the heat treatment applied in the bonding oven 150 dry off the solvent, such as water, from the solution, emulsion, suspension or dispersion to form the air-laid blank 10.

The various embodiments of the apparatus 100 as discussed above in connection with Figs. 7 to 9 also apply to the embodiment of the apparatus 100 as shown in Fig. 10.

The present invention also relates to a sound absorbing or damping article 20, see Figs. 11A to 11C. The sound absorbing or damping article 20 comprises or is made of an air-laid blank 10 of the present invention. Hence, in an embodiment, the air-laid blank 10 is suitable for production of a sound absorbing or damping article 20 and could thereby be referred to as a sound absorbing or damping air-laid blank 10.

The sound absorbing or damping articles 20 as shown in Figs. 1 1A to 11C comprise, as the air-laid blanks 10, from which they are made, multiple portions 21 having a local fiber orientation distribution that is different from a fiber orientation distribution of a remaining portion 23 of the sound absorbing or damping articles 20.

The sound absorbing or damping article 20 could be obtained following any processing of the air-laid blank 10 in the above exemplified sawing, cutting or stamping device, calendering device, hot pressing device, anti-linting device, and/or surface treatment device.

The sound absorbing or damping article 20 could be any article, structure or product that is used for sound absorption and/or damping. Illustrative, but non-limiting, examples of such sound absorbing or damping articles 20 include sound absorbing or damping panels, such as sound absorbing or damping ceiling panels, sound absorbing or damping wall panels, or sound absorbing or damping floor panels; sound absorbing or damping stands; sound damping decorative elements; sound absorbing or damping boards; etc.

The air-laid blanks 10 of the present invention are not only suitable for usage as a basis for sound absorbing or damping articles 20. The air-laid blanks 10 can alternatively be used for cushioning packaged goods. The air-laid blanks 10 and articles or products made therefrom are highly suitable for cushioning of packaged goods providing excellent shock absorbing and damping properties. They can therefore be used for protecting packaged goods during storage and/or transport. Air-laid blanks 10 having cavities or pores 15 extending into the air-laid blank 10 as shown in Figs. 3 and 4 or indeed channels extending through the thickness of the air-laid blank 10, and articles and products made from such air-laid blanks 10, are in particular suitable for cushioning of packaged goods.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

## Claims

1. An air-laid blank (10) comprising:
natural fibers; and
a thermoplastic polymer binder, wherein
the air-laid blank (10) comprises multiple portions (11) having a local fiber orientation distribution that is different from a fiber orientation distribution of a remaining portion (13) of the air-laid blank (10).

2. The air-laid blank according to claim 1, wherein the multiple portions (11) extend through at least a portion of a thickness of the air-laid blank (10) from a first major surface (12) of the air-laid blank (10) to a second, opposite major surface (14) of the air-laid blank (10).

3. The air-laid blank according to claim 1 or 2, wherein
the multiple portions (11) comprises a cavity (15) or channel extending into the air-laid blank (10); and
the local fiber orientation distribution of the multiple portions (11) adjacent to the cavity (15) or channel is different from the fiber orientation distribution of the remaining portion (13) of the air-laid blank (10).

4. The air-laid blank according to any one of claims 1 to 3, wherein the local fiber orientation distribution of the multiple portions (11) has a higher level of isotropy as compared to the fiber orientation distribution of the remaining portion (13) of the air-laid blank (10).

5. The air-laid blank according to any one of claims 1 to 4, wherein a major portion of fibers of the remaining portion (13) of the air-laid blank (10) is oriented parallel or substantially parallel to a first major surface (12) and a second major surface (14) of the air-laid blank (10).

6. The air-laid blank according to any one of claims 1 to 5, wherein the air-laid blank (10) comprises:
the natural fibers at a concentration of at least 70 % by weight of the air-laid blank (10); and
the thermoplastic polymer binder at a concentration selected within an interval of from 2.5 up to 30 % by weight of the air-laid blank (10).

7. The air-laid blank according to any one of claims 1 to 6, wherein the natural fibers comprise wood fibers, preferably cellulose and/or lignocellulose fibers, and more preferably cellulose and/or lignocellulose pulp fibers produced by chemical, mechanical and/or chemi-mechanical pulping of softwood and/or hardwood.

8. The air-laid blank according to any one of claims 1 to 7, wherein the thermoplastic polymer binder is selected from the group consisting of a thermoplastic polymer powder, thermoplastic polymer fibers and a combination thereof.

9. A method of producing an air-laid blank (10), the method comprising:
introducing (S1) natural fibers and a thermoplastic polymer binder and/or a mixture of the natural fibers and the thermoplastic polymer binder into at least one inlet (111) of a forming head (110);
transporting (S2) the natural fibers and the thermoplastic polymer binder and/or the mixture to an outlet (113) of the forming head (110);
capturing (S3) the natural fibers and the thermoplastic polymer binder and/or the mixture as an unbound air-laid web (30) on a collector (120) arranged in connection with the outlet (113) of the forming head (110);
applying (S4) gas pulses onto multiple portions (31) of the unbound air-laid web (30) to induce local distortions of fiber orientations in the multiple portions (31); and
heat treating (S5) the unbound air-laid web (30) to at least partly melt the thermoplastic polymer binder and form an air-laid blank (10).

10. The method according to claim 9, wherein heat treating (S5) comprises heat treating (S5) the unbound air-laid web (30) to at least partly melt the thermoplastic polymer binder and form an air-laid blank (10) comprising multiple portions (11) having a local fiber orientation distribution that is different from a fiber orientation distribution of a remaining portion (13) of the air-laid blank (10).

11. A method of producing an air-laid blank (10), the method comprising:
introducing (S10) natural fibers into at least one inlet (111) of a forming head (110);
transporting (S11) the natural fibers to an outlet (113) of the forming head (110);
capturing (S12) the natural fibers as a web (40) of natural fibers on a collector (120) arranged in connection with the outlet (113) of the forming head (110);
applying (S13) gas pulses onto multiple portions (41) of the web (40) of natural fibers on the collector (120) to induce local distortions of fiber orientations in the multiple portions (41);
applying (S14) a thermoplastic polymer binder onto the natural fibers; and
heat treating (S15) the web (40) of natural fibers and the thermoplastic polymer binder to form an air-laid blank (10).

12. The method according to claim 11, wherein heat treating (S15) comprises heat treating (S15) the web (40) of natural fibers and the thermoplastic polymer binder to form an air-laid blank (10) comprising multiple portions (11) having a local fiber orientation distribution that is different from a fiber orientation distribution of a remaining portion (13) of the air-laid blank (10).

13. The method according to any one of claims 9 to 12, wherein the method is for producing an air-laid blank (10) according to any of claims 1 to 8.

14. An apparatus (100) for producing an air-laid blank (10), the apparatus (100) comprises:
a forming head (110) comprising at least one inlet (111) configured to receive natural fibers and a thermoplastic polymer binder and/or a mixture of the natural fibers and the thermoplastic polymer binder and an outlet (113);
a belt collector (120) running between drive rollers (122, 124) and arranged in connection with the outlet (113) of the forming head (110) and configured to capture the natural fibers and the thermoplastic polymer binder and/or the mixture as an unbound air-laid web (30);
a nozzle system (130) arranged downstream of the forming head (110) and comprising at least one gas nozzle (132) configured to apply gas pulses onto multiple portions (31) of the unbound air-laid web (30) positioned on the belt collector (120) to induce local distortions of fiber orientations in the multiple portions (31); and
a bonding oven (150) arranged downstream of the nozzle system (130) and configured to heat treat the unbound air-laid web (30) to at least partly melt the thermoplastic polymer binder and form an air-laid blank (10).

15. An apparatus (100) for producing an air-laid blank (10), the apparatus (100) comprises:
a forming head (110) comprising at least one inlet (111) configured to receive natural fibers and an outlet (113);
a belt collector (120) running between drive rollers (122, 124) and arranged in connection with the outlet (113) of the forming head (110) and configured to capture the natural fibers as a web (40) of natural fibers;
a nozzle system (130) arranged downstream of the forming head (110) and comprising at least one gas nozzle (132) configured to apply gas pulses onto multiple portions (41) of the web (40) of natural fibers positioned on the belt collector (120) to induce local distortions of fiber orientations in the multiple portions (41);
a device (160) configured to apply a thermoplastic polymer binder onto the web (40) of natural fibers; and
a bonding oven (150) arranged downstream of the nozzle system (130) and the device (160) and configured to heat treat the natural fibers and the thermoplastic polymer binder to form an air-laid blank (10).

16. A sound absorbing or damping article (20) comprising or made from an air-laid blank (10) according to any one of the claims 1 to 8.

## Patentansprüche

1. Luftgelegter Rohling (10), umfassend:
Naturfasern; und
ein thermoplastisches Polymerbindemittel, wobei
der luftgelegte Rohling (10) mehrere Abschnitte (11) mit einer lokalen Faserorientierungsverteilung umfasst, die sich von einer Faserorientierungsverteilung eines verbleibenden Abschnitts (13) des luftgelegten Rohlings (10) unterscheidet.

2. Luftgelegter Rohling nach Anspruch 1, wobei sich die mehreren Abschnitte (11) durch mindestens einen Abschnitt einer Dicke des luftgelegten Rohlings (10) von einer ersten Hauptfläche (12) des luftgelegten Rohlings (10) zu einer zweiten, gegenüberliegenden Hauptfläche (14) des luftgelegten Rohlings (10) erstrecken.

3. Luftgelegter Rohling nach Anspruch 1 oder 2, wobei
die mehreren Abschnitte (11) einen Hohlraum (15) oder Kanal umfassen, der sich in den luftgelegten Rohling (10) erstreckt; und
die lokale Faserorientierungsverteilung der mehreren Abschnitte (11), die an den Hohlraum (15) oder Kanal angrenzen, sich von der Faserorientierungsverteilung des verbleibenden Abschnitts (13) des luftgelegten Rohlings (10) unterscheidet.

4. Luftgelegter Rohling nach einem der Ansprüche 1 bis 3, wobei die lokale Faserorientierungsverteilung der mehreren Abschnitte (11) ein höheres Maß an Isotropie als die Faserorientierungsverteilung des verbleibenden Abschnitts (13) des luftgelegten Rohlings (10) aufweist.

5. Luftgelegter Rohling nach einem der Ansprüche 1 bis 4, wobei ein Hauptabschnitt der Fasern des verbleibenden Abschnitts (13) des luftgelegten Rohlings (10) parallel oder im Wesentlichen parallel zu einer ersten Hauptfläche (12) und einer zweiten Hauptfläche (14) des luftgelegten Rohlings (10) orientiert ist.

6. Luftgelegter Rohling nach einem der Ansprüche 1 bis 5, wobei der luftgelegte Rohling (10) umfasst:
die Naturfasern in einer Konzentration von mindestens 70 Gew.-% des luftgelegten Rohlings (10); und
das thermoplastische Polymerbindemittel in einer Konzentration, die innerhalb eines Intervalls von 2,5 bis zu 30 Gew.-% des luftgelegten Rohlings (10) ausgewählt ist.

7. Luftgelegter Rohling nach einem der Ansprüche 1 bis 6, wobei die Naturfasern Holzfasern, vorzugsweise Cellulose- und/oder Lignocellulosefasern, und besonders bevorzugt Cellulose- und/oder Lignocellulose-Zellstofffasern umfassen, die durch chemischen, mechanischen und/oder chemisch-mechanischen Aufschluss von Weichholz und/oder Hartholz hergestellt werden.

8. Luftgelegter Rohling nach einem der Ansprüche 1 bis 7, wobei das thermoplastische Polymerbindemittel ausgewählt ist aus der Gruppe bestehend aus einem thermoplastischen Polymerpulver, thermoplastischen Polymerfasern und einer Kombination davon.

9. Verfahren für ein Herstellen eines luftgelegten Rohlings (10), das Verfahren umfassend:
Einbringen (S1) von Naturfasern und eines thermoplastischen Polymerbindemittels und/oder eines Gemisches der Naturfasern und des thermoplastischen Polymerbindemittels in mindestens einen Einlass (111) eines Formkopfes (110);
Transportieren (S2) der Naturfasern und des thermoplastischen Polymerbindemittels und/oder des Gemisches zu einem Auslass (113) des Formkopfes (110);
Erfassen (S3) der Naturfasern und des thermoplastischen Polymerbindemittels und/oder des Gemisches als ungebundene luftgelegte Bahn (30) auf einem Sammler (120), der in Verbindung mit dem Auslass (113) des Formkopfes (110) angeordnet ist;
Aufbringen (S4) von Gasimpulsen auf mehrere Abschnitte (31) der ungebundenen luftgelegten Bahn (30), um lokale Verzerrungen der Faserorientierungen in den mehreren Abschnitten (31) zu bewirken; und
Wärmebehandeln (S5) der ungebundenen luftgelegten Bahn (30), um das thermoplastische Polymerbindemittel wenigstens teilweise zu schmelzen und einen luftgelegten Rohling (10) zu bilden.

10. Verfahren nach Anspruch 9, wobei das Wärmebehandeln (S5) eine Wärmebehandlung (S5) der ungebundenen luftgelegten Bahn (30) umfasst, um das thermoplastische Polymerbindemittel wenigstens teilweise zu schmelzen und einen luftgelegten Rohling (10) zu bilden, der mehrere Abschnitte (11) mit einer lokalen Faserorientierungsverteilung umfasst, die sich von einer Faserorientierungsverteilung eines verbleibenden Abschnitts (13) des luftgelegten Rohlings (10) unterscheidet.

11. Verfahren für ein Herstellen eines luftgelegten Rohlings (10), das Verfahren umfassend:
Einbringen (S10) von Naturfasern in mindestens einen Einlass (111) eines Formkopfes (110);
Transportieren (S11) der Naturfasern zu einem Auslass (113) des Formkopfes (110);
Erfassen (S12) der Naturfasern als eine Bahn (40) aus Naturfasern auf einem Sammler (120), der in Verbindung mit dem Auslass (113) des Formkopfes (110) angeordnet ist;
Aufbringen (S13) von Gasimpulsen auf mehrere Abschnitte (41) der Bahn (40) aus Naturfasern auf dem Sammler (120), um lokale Verzerrungen der Faserorientierungen in den mehreren Abschnitten (41) zu bewirken;
Aufbringen (S14) eines thermoplastischen Polymerbindemittels auf die Naturfasern; und
Wärmebehandeln (S15) der Bahn (40) aus Naturfasern und dem thermoplastischen Polymerbindemittel, um einen luftgelegten Rohling (10) zu bilden.

12. Verfahren nach Anspruch 11, wobei das Wärmebehandeln (S15) eine Wärmebehandlung (S15) der Bahn (40) aus Naturfasern und dem thermoplastischen Polymerbindemittel umfasst, um einen luftgelegten Rohling (10) zu bilden, der mehrere Abschnitte (11) mit einer lokalen Faserorientierungsverteilung umfasst, die sich von einer Faserorientierungsverteilung eines verbleibenden Abschnitts (13) des luftgelegten Rohlings (10) unterscheidet.

13. Verfahren nach einem der Ansprüche 9 bis 12, wobei das Verfahren für ein Herstellen eines luftgelegten Rohlings (10) nach einem der Ansprüche 1 bis 8 dient.

14. Vorrichtung (100) für ein Herstellen eines luftgelegten Rohlings (10), die Vorrichtung (100) umfassend:
einen Formkopf (110), umfassend mindestens einen Einlass (111), der ausgelegt ist, Naturfasern und ein thermoplastisches Polymerbindemittel und/oder ein Gemisch aus den Naturfasern und dem thermoplastischen Polymerbindemittel aufzunehmen, und einem Auslass (113);
einen zwischen Antriebsrollen (122, 124) verlaufenden Bandsammler (120), der in Verbindung mit dem Auslass (113) des Formkopfes (110) angeordnet und ausgelegt ist, um die Naturfasern und das thermoplastische Polymerbindemittel und/oder das Gemisch als ungebundene, luftgelegte Bahn (30) zu erfassen;
ein Düsensystem (130), das stromabwärts des Formkopfes (110) angeordnet ist und mindestens eine Gasdüse (132) umfasst, die ausgelegt ist, um Gasimpulse auf mehrere Abschnitte (31) der ungebundenen, luftgelegten Bahn (30), die auf dem Bandsammler (120) positioniert ist, aufzubringen, um lokale Verzerrungen der Faserorientierungen in den mehreren Abschnitten (31) zu bewirken; und
einen Bindungsofen (150), der stromabwärts des Düsensystems (130) angeordnet und ausgelegt ist, die ungebundene luftgelegte Bahn (30) wärmezubehandeln, um das thermoplastischen Polymerbindemittel wenigstens teilweise zu schmelzen und einen luftgelegten Rohling (10) zu bilden.

15. Vorrichtung (100) für ein Herstellen eines luftgelegten Rohlings (10), die Vorrichtung (100) umfassend:
einen Formkopf (110), umfassend mindestens einen Einlass (111), ausgelegt für ein Aufnehmen von Naturfasern, und einen Auslass (113);
einen zwischen Antriebsrollen (122, 124) verlaufenden Bandsammler (120), der in Verbindung mit dem Auslass (113) des Formkopfes (110) angeordnet und ausgelegt ist, um die Naturfasern als eine Bahn (40) aus Naturfasern zu erfassen;
ein Düsensystem (130), das stromabwärts des Formkopfes (110) angeordnet ist und mindestens eine Gasdüse (132) umfasst, die ausgelegt ist, um Gasimpulse auf mehrere Abschnitte (41) der Bahn (40) aus Naturfasern, die auf dem Bandsammler (120) positioniert ist, aufzubringen, um lokale Verzerrungen der Faserorientierungen in den mehreren Abschnitten (41) zu bewirken;
eine Vorrichtung (160), die ausgelegt ist, ein thermoplastisches Polymerbindemittel auf die Bahn (40) aus Naturfasern aufzubringen; und
einen Bindungsofen (150), der stromabwärts des Düsensystems (130) und der Vorrichtung (160) angeordnet und ausgelegt ist, die Naturfasern und das thermoplastische Polymerbindemittel wärmezubehandeln, um einen luftgelegten Rohling (10) zu bilden.

16. Schallabsorbierender oder -dämpfender Artikel (20), der einen luftgelegten Rohling (10) nach einem der Ansprüche 1 bis 8 umfasst oder daraus hergestellt ist.

## Revendications

1. Flan formé par voie pneumatique (10) comprenant :
des fibres naturelles ; et
un liant polymère thermoplastique, dans lequel
le flan formé par voie pneumatique (10) comprend de multiples portions (11) ayant une distribution locale d'orientation de fibres qui est différente d'une distribution d'orientation de fibres d'une portion restante (13) du flan formé par voie pneumatique (10).

2. Flan formé par voie pneumatique selon la revendication 1, dans lequel les multiples portions (11) s'étendent à travers au moins une portion d'une épaisseur du flan formé par voie pneumatique (10) d'une première surface principale (12) du flan formé par voie pneumatique (10) à une deuxième surface principale (14) opposée du flan formé par voie pneumatique (10).

3. Flan formé par voie pneumatique selon la revendication 1 ou 2, dans lequel
les multiples portions (11) comprennent une cavité (15) ou un canal s'étendant dans le flan formé par voie pneumatique (10) ; et
la distribution locale d'orientation de fibres des multiples portions (11) adjacentes à la cavité (15) ou au canal est différente de la distribution d'orientation de fibres de la portion restante (13) du flan formé par voie pneumatique (10).

4. Flan formé par voie pneumatique selon l'une quelconque des revendications 1 à 3, dans lequel la distribution locale d'orientation de fibres des multiples portion (11) a un niveau d'isotropie supérieur comparativement à la distribution d'orientation de fibres de la portion restante (13) du flan formé par voie pneumatique (10).

5. Flan formé par voie pneumatique selon l'une quelconque des revendications 1 à 4, dans lequel une majeure portion de fibres de la portion restante (13) du flan formé par voie pneumatique (10) est orientée parallèlement ou sensiblement parallèlement à une première surface principale (12) et à une deuxième surface principale (14) du flan formé par voie pneumatique (10).

6. Flan formé par voie pneumatique selon l'une quelconque des revendications 1 à 5, dans lequel le flan formé par voie pneumatique (10) comprend :
les fibres naturelles à une concentration d'au moins 70 % en poids du flan formé par voie pneumatique (10) ; et
le liant polymère thermoplastique à une concentration choisie dans un intervalle de 2,5 jusqu'à 30 % en poids du flan formé par voie pneumatique (10).

7. Flan formé par voie pneumatique selon l'une quelconque des revendications 1 à 6, dans lequel les fibres naturelles comprennent des fibres de bois, de préférence des fibres de cellulose et/ou de lignocellulose, et de manière davantage préférée des fibres de cellulose et/ou de pâte de lignocellulose produites par réduction en pâte chimique, mécanique et/ou chimico-mécanique de bois résineux et/ou de bois de feuillus.

8. Flan formé par voie pneumatique selon l'une quelconque des revendications 1 à 7, dans lequel le liant polymère thermoplastique est choisi dans le groupe constitué par une poudre polymère thermoplastique, des fibres polymères thermoplastiques et une combinaison de celles-ci.

9. Procédé de production d'un flan formé par voie pneumatique (10), le procédé comprenant :
l'introduction (S1) de fibres naturelles et d'un liant polymère thermoplastique et/ou d'un mélange des fibres naturelles et du liant polymère thermoplastique dans au moins une entrée (111) d'une tête de formage (110) ;
le transport (S2) des fibres naturelles et du liant polymère thermoplastique et/ou du mélange jusqu'à une sortie (113) de la tête de formage (110) ;
la capture (S3) des fibres naturelles et du liant polymère thermoplastique et/ou du mélange sous la forme d'une nappe formée par voie pneumatique non liée (30) sur un collecteur (120) agencé en liaison avec la sortie (113) de la tête de formage (110) ;
l'application (S4) d'impulsions de gaz sur de multiples portions (31) de la nappe non liée formée par voie pneumatique (30) pour induire des distorsions locales des orientations de fibres dans les multiples portions (31) ; et
le traitement thermique (S5) de la nappe formée par voie pneumatique no liée (30) pour fondre au moins partiellement le liant polymère thermoplastique et former un flan formé par voie pneumatique (10).

10. Procédé selon la revendication 9, dans lequel le traitement thermique (S5) comprend le traitement thermique (S5) de la nappe formée par voie pneumatique non liée (30) pour fondre au moins partiellement le liant polymère thermoplastique et former un flan formé par voie pneumatique (10) comprenant de multiples portions (11) ayant une distribution locale d'orientation de fibres qui est différente d'une distribution d'orientation de fibres d'une portion restante (13) du flan formé par voie pneumatique (10).

11. Procédé de production d'un flan formé par voie pneumatique (10), le procédé comprenant :
l'introduction (S10) de fibres naturelles dans au moins une entrée (111) d'une tête de formage (110) ;
le transport (S11) des fibres naturelles jusqu'à une sortie (113) de la tête de formage (110) ;
la capture (S12) des fibres naturelles sous la forme d'une nappe (40) de fibres naturelles sur un collecteur (120) agencé en liaison avec la sortie (113) de la tête de formage (110) ;
l'application (S13) d'impulsions de gaz sur de multiples portions (41) de la nappe (40) de fibres naturelles sur le collecteur (120) pour induire des distorsions locales des orientations de fibres dans les multiples portions (41) ;
l'application (S14) d'un liant polymère thermoplastique sur les fibres naturelles ; et
le traitement thermique (S15) de la nappe (40) de fibres naturelles et du liant polymère thermoplastique pour former un flan formé par voie pneumatique (10).

12. Procédé selon la revendication 11, dans lequel le traitement thermique (S15) comprend le traitement thermique (S15) de la nappe (40) de fibres naturelles et du liant polymère thermoplastique pour former un flan formé par voie pneumatique (10) comprenant de multiples portions (11) ayant une distribution locale d'orientation de fibres qui est différente d'une distribution d'orientation de fibres d'une portion restante (13) du flan formé par voie pneumatique (10).

13. Procédé selon l'une quelconque des revendications 9 à 12, dans lequel le procédé est destiné à produire un flan formé par voie pneumatique (10) selon l'une quelconque des revendications 1 à 8.

14. Appareil (100) de production d'un flan formé par voie pneumatique (10), l'appareil (100) comprenant :
une tête de formage (110) comprenant au moins une entrée (111) configurée pour recevoir des fibres naturelles et un liant polymère thermoplastique et/ou un mélange des fibres naturelles et du liant polymère thermoplastique et une sortie (113) ;
un collecteur (120) à courroie circulant entre des rouleaux d'entraînement (122, 124) et agencé en liaison avec la sortie (113) de la tête de formage (110) et configuré pour capturer les fibres naturelles et le liant polymère thermoplastique et/ou le mélange sous la forme d'une nappe formée par voie pneumatique non liée (30) ;
un système de buse (130) agencé en aval de la tête de formage (110) et comprenant au moins une buse de gaz (132) configurée pour appliquer des impulsions de gaz sur de multiples portions (31) de la nappe formée par voie pneumatique non liée (30) positionnée sur le collecteur à courroie (120) pour induire des distorsions locales des orientations de fibres dans les multiples portions (31) ; et
un four de liaison (150) agencé en aval du système de buse (130) et configuré pour traiter thermiquement la nappe formée par voie pneumatique non liée (30) pour fondre au moins partiellement le liant polymère thermoplastique et former un flan formé par voie pneumatique (10).

15. Appareil (100) de production d'un flan formé par voie pneumatique (10), l'appareil (100) comprenant :
une tête de formage (110) comprenant au moins une entrée (111) configurée pour recevoir des fibres naturelles et une sortie (113) ;
un collecteur à courroie (120) circulant entre des rouleaux d'entraînement (122, 124) et agencé en liaison avec la sortie (113) de la tête de formage (110) et configuré pour capturer les fibres naturelles sous la forme d'une nappe (40) de fibres naturelles ;
un système de buse (130) agencé en aval de la tête de formage (110) et comprenant au moins une buse de gaz (132) configurée pour appliquer des impulsions de gaz sur de multiples portions (41) de la nappe (40) de fibres naturelles positionnée sur le collecteur à courroie (120) pour induire des distorsions locales des orientations de fibres dans les multiples portions (41) ;
un dispositif (160) configuré pour appliquer un liant polymère thermoplastique sur la nappe (40) de fibres naturelles ; et
un four de liaison (150) agencé en aval du système de buse (130) et du dispositif (160) et configuré pour traiter thermiquement les fibres naturelles et le liant polymère thermoplastique pour former un flan formé par voie pneumatique (10).

16. Article d'absorption ou d'amortissement du son (20) comprenant ou constitué par un flan formé par voie pneumatique (10) selon l'une quelconque des revendications 1 à 8.
